# EUROPEAN PATENT APPLICATION

(11) **EP 3 294 013 A1**
(43) Date of publication of application: **14.03.2018**
(21) Application number: 16810975.9
(22) Date of filing: 14.06.2016
(51) Int. Cl.: H04W 52/38, H04W 52/28, H04W 52/10, H04W 64/00, H04W 24/02, H04W 84/18, G08G 1/16

(54) **COMMUNICATION METHOD AND TERMINAL**

(30) Priority: 16.06.2015 CN 201510333591
(71) Applicant: Huawei Technologies Co., Ltd., Longgang District Shenzhen, Guangdong 518129 (CN)
(72) Inventor: ZHANG, Jun, Shenzhen Guangdong 518129 (CN)
(74) Representative: Epping - Hermann - Fischer
(86) International application number: PCT/CN2016/085665
(87) International publication number: WO 2016/202234

(57) **Abstract**

The present invention relates to a communication method and a terminal. The method includes: determining, by a first terminal, a distance between the first terminal and a second terminal; receiving second speed information sent by the second terminal, where the second speed information is current speed information of the second terminal; determining a power value according to the distance, the second speed information, and first speed information of the first terminal, where the first speed information is current speed information of the first terminal; and sending a signal to the second terminal according to the power value. Therefore, according to the communication method in embodiments of the present invention, a first terminal receives in real time second location information and second speed information that are sent by a second terminal, and determines, in real time according to the second location information, the second speed information, and first speed information and first location information of the first terminal, a power value for sending a signal. That is, the power value for sending a signal is dynamically adjusted, and a requirement on safe driving is met.

## Description

### TECHNICAL FIELD

The present invention relates to the communications field, and in particular, to a communication method and a terminal.

### BACKGROUND

Every year, a large quantity of traffic accidents cause huge losses to people. It is expected to reduce traffic accidents by using vehicle-to-vehicle (Vehicle-to-Vehicle, V2V) communications technologies. Currently, there is no mature V2V communications technology that can be put into commercial use on a large scale, and a relatively leading representative technology is a dedicated short range communications (Dedicated Short Range Communications, DSRC) technology.

However, in the existing DSRC technology, available channel resources used for communication are limited and each channel transmits a signal by using a fixed transmit power value in a fixed direction. Consequently, when vehicles aggregate at a low speed, signal interference is caused; when vehicles run at a high speed, coverage of a transmitted signal cannot meet a requirement on a safety distance.

### SUMMARY

Embodiments of the present invention provide a communication method and a system, to dynamically adjust a power value for transmitting a signal on a channel, so that the power value for sending a signal is dynamically adjusted, and a requirement on safe driving is met.

According to a first aspect, an embodiment of the present invention provides a communication method, including: determining, by a first terminal, a distance between the first terminal and a second terminal; receiving, by the first terminal, second speed information sent by the second terminal, where the second speed information is current speed information of the second terminal; determining, by the first terminal, a power value according to the distance, the second speed information, and first speed information of the first terminal, where the first speed information is current speed information of the first terminal; and sending, by the first terminal, a signal to the second terminal according to the power value.

With reference to the first aspect, in a first possible implementation of the first aspect, the determining, by the first terminal, a power value according to the distance, the second speed information, and first speed information of the first terminal includes: receiving, by the first terminal, road surface parameter information sent by a road side unit device, where the road side unit device is a communications device disposed on a road side; adjusting, by the first terminal, the power value according to the road surface parameter information; and sending, by the first terminal, a signal to the second terminal according to an adjusted power value.

With reference to the first possible implementation of the first aspect, in a second possible implementation of the first aspect, the road surface parameter information includes a braking distance, and the power value is in direct proportion to the braking distance.

With reference to the first aspect, in a third possible implementation of the first aspect, the determining, by a first terminal, a distance between the first terminal and a second terminal specifically includes: obtaining, by the first terminal, first location information of the first terminal; receiving, by the first terminal, second location information sent by the second terminal; and determining, by the first terminal, the distance between the first terminal and the second terminal according to the first location information and the second location information.

With reference to the first aspect, in a fourth possible implementation of the first aspect, the determining, by the first terminal, a power value according to the distance, the second speed information, and first speed information of the first terminal specifically includes: determining, by the first terminal, relative speed information between the first terminal and the second terminal according to the second speed information and the first speed information; and determining, by the first terminal, the power value according to the distance and the relative speed information.

With reference to the first possible implementation of the first aspect, in a fifth possible implementation of the first aspect, the adjusting, by the first terminal, the power value according to the received road surface parameter information sent by the road side unit device specifically includes: determining, by the first terminal, relative speed information between the first terminal and the second terminal according to the second speed and the first speed; and adjusting, by the first terminal, the power value according to the distance, the relative speed information, and the road surface parameter information.

With reference to the first aspect or the second possible implementation of the first aspect, in a sixth possible implementation of the first aspect, the distance is in direct proportion to the power value.

With reference to the fourth or fifth possible implementation of the first aspect, the relative speed is in direct proportion to the power value.

According to a second aspect, the terminal includes: a determining module, configured to determine a distance between the terminal and a second terminal; a receiving module, configured to receive second speed information sent by the second terminal, where the second speed information is current speed information of the second terminal; and the determining module is further configured to determine a power value according to the distance, the second speed information, and first speed information of the first terminal, where the first speed information is current speed information of the first terminal; and a sending module, configured to send a signal to the second terminal according to the power value.

With reference to the second aspect, in a first possible implementation of the first aspect, the device further includes an adjustment module where the receiving module is further configured to receive road surface parameter information sent by a road side unit device, where the road side unit device is a communications device disposed on a road side; the adjusting module is configured to adjust the power value according to the road surface parameter information; and the sending module is further configured to send a signal to the second terminal according to an adjusted power value.

With reference to the first possible implementation of the second aspect, in a second possible implementation of the second aspect, the terminal further includes an obtaining module, where the obtaining module is configured to obtain first location information of the first terminal; the receiving module is further configured to receive second location information sent by the second terminal; and the determining module is further configured to determine the distance between the first terminal and the second terminal according to the first location information and the second location information.

With reference to a third possible implementation of the second aspect, the determining module is specifically configured to: determine relative speed information between the first terminal and the second terminal according to the second speed information and the first speed information; and determine the power value according to the distance and the relative speed information.

With reference to the first possible implementation of the second aspect, in a fourth possible implementation of the second aspect, the determining module is specifically configured to determine relative speed information between the first terminal and the second terminal according to the second speed and the first speed; and the adjustment module is specifically configured to adjust the power value according to the distance, the relative speed information, and the road surface parameter information.

Therefore, according to the communication method in the embodiments of the present invention, a first terminal receives in real time second location information and second speed information that are sent by a second terminal, and determines, in real time according to the second location information, the second speed information, and first speed information and first location information of the first terminal, a power value for sending a signal. That is, the power value for sending a signal is dynamically adjusted, and a requirement on safe driving is met.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a communication method according to an embodiment of the present invention;
FIG. 2 is a schematic flowchart of a communication method according to another embodiment of the present invention;
FIG. 3 is a schematic interaction diagram of a communication method according to an embodiment of the present invention;
FIG. 4 is a schematic structural diagram of a terminal according to another embodiment of the present invention;
FIG. 5 is a schematic structural diagram of a terminal according to an embodiment of the present invention;
FIG. 6 is a schematic structural diagram of a terminal according to another embodiment of the present invention;
FIG. 7 is a schematic structural diagram of a terminal according to still another embodiment of the present invention; and
FIG. 8 is a schematic structural diagram of a terminal according to yet another embodiment of the present invention.

### DESCRIPTION OF EMBODIMENTS

A communication method and a terminal provided in embodiments of the present invention are specifically used for communication between vehicles. In the embodiments of the present invention, it is referred to as vehicle-to-vehicle (Vehicle-to-Vehicle, "V2V" for short) communication. A first terminal and a second terminal may be specifically an in-vehicle device having a V2V communication function or a motor vehicle equipped with an in-vehicle device having a V2V communication function, including: an on-board diagnostic (English: On-Board Diagnostic, OBD for short) apparatus, configured to collect data about a vehicle, for example, a vehicle speed or a direction angle; and a global navigation satellite system (English: Global Navigation Satellite System, GNSS for short) apparatus, configured to collect navigation satellite signals and calculate vehicle location information. In the embodiments, a road side unit (English: Road Side Unit, RSU for short) device may also be included. The road side unit device may be specifically a communications device disposed on a road side and configured to collect environmental parameter information, for example, parameter information such as road surface parameter information or vehicle density. In the embodiments of the present invention, the first terminal obtains in real time parameter information that is sent by a second terminal and another device, and adjusts, in real time according to the parameter information, a power value for sending a signal by the first terminal, so as to meet a requirement on safe driving.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

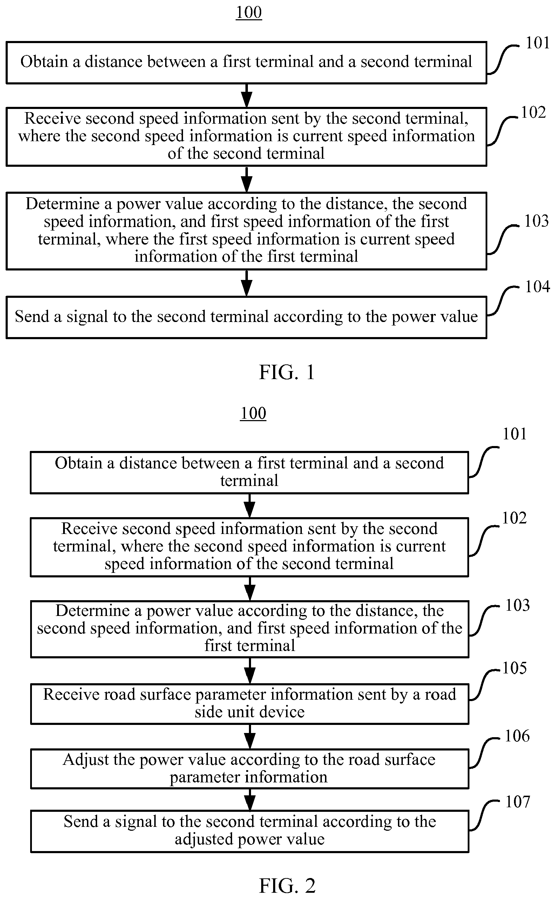

FIG. 1 is a schematic flowchart of a communication method according to an embodiment of the present invention. As shown in FIG. 1, the method 100 may be performed by a first V2V terminal, and the method includes the following steps:

101. A first terminal determines a distance between the first terminal and a second terminal.

102. The first terminal receives second speed information sent by the second terminal, where the second speed information is current speed information of the second terminal.

103. The first terminal determines a power value according to the distance, the second speed information, and first speed information of the first terminal, where the first speed information is current speed information of the first terminal.

104. The first terminal sends a signal to the second terminal according to the power value.

Specifically, during running, the first terminal receives information sent by the second terminal. The information includes second location information and second speed information, the second location information may be current location information of the second terminal, and the second speed information may be current speed information of the second terminal. The first terminal determines a power value according to the received information and obtained first speed information and location information of the first terminal, and sends a signal to the second terminal according to the power value. The signal includes the first speed information and first location information of the first terminal.

It should be understood that in this embodiment of the present invention, the information sent by the second terminal may further include a direction angle of the second terminal during running or other information about the second terminal, and is not limited in the present invention.

Optionally, in this embodiment of the present invention, the determining, by a first terminal, a distance between the first terminal and a second terminal may specifically includes: obtaining the first location information of the first terminal, receiving the second location information sent by the second terminal device, and determining the distance between the first terminal and the second terminal according to the first location information and the second location information.

In 102, the first speed information is speed information of the first terminal at a current moment. The first terminal obtains the stored first speed information, that is, the speed information of the first terminal. In this embodiment of the present invention, an on-board diagnostic OBD apparatus needs to detect a first speed of the first terminal in real time, and sends the detected first speed information to the first terminal. The first terminal receives the first speed information sent by the on-board diagnostic OBD apparatus and stores the first speed information. When the power value for sending a signal by the first terminal needs to be adjusted, the first terminal obtains the stored speed information that is at the current moment.

In 103, the first terminal determines, according to the distance between the first terminal and the second terminal, the second speed information, and the first speed information, the power value for sending a signal by the first terminal.

In 104, the signal includes the first location information and the first speed information of the first terminal. The first terminal sends the signal according to the power value, so that the second terminal performs alarm processing according to the signal after receiving the signal. That is, the second terminal performs processing according to the received signal. When a preset alarm condition is met, an alarm is sent; when the alarm condition is not met, no alarm is sent.

Optionally, in another embodiment of the present invention, the determining a power value according to the distance, the second speed information, and first speed information of the first terminal includes: determining relative speed information between the first terminal and the second terminal according to a second speed and a first speed, and determining the power value according to the distance and the relative speed information.

Specifically, in this embodiment of the present invention, the first terminal determines, according to the distance between the first terminal and the second terminal and the relative speed information between the first terminal and the second terminal, the power value for sending a signal by the first terminal.

Optionally, in another embodiment of the present invention, the power value is in direct proportion to the distance.

Specifically, the power value for sending a signal by the first terminal is in direct proportion to the distance between the first terminal and the second terminal.

Optionally, in another embodiment of the present invention, power is in direct proportion to the relative speed information.

Specifically, the power value for sending a signal by the first terminal is in direct proportion to the relative speed information between the first terminal and the second terminal.

In this embodiment of the present invention, the first terminal may determine an influencing factor according to the distance between the first terminal and the second terminal, a preset maximum distance between the first terminal and the second terminal, a relative speed between the first terminal and the second terminal, and a preset maximum relative speed between the first terminal and the second terminal. According to the influencing factor and a preset maximum power value for sending a signal by the first terminal, the first terminal determines a theoretical power value for sending a signal by the first terminal. The first terminal selects a larger value in the theoretical power value and a preset minimum power value for sending a signal by the first terminal as the power value for sending a signal by the first terminal, so as to meet a requirement on vehicle-to-vehicle communications during running.

For example, the power value for sending a signal by the first terminal = MAX [Pmin, (v/Vmax)*(d/Dmax)*Pmax]. Pmin is the preset minimum power value for sending a signal by the first terminal, v is the relative speed between the first terminal and the second terminal, Vmax is the preset maximum relative speed between the first terminal and the second terminal, d is the distance between the first terminal and the second terminal, Dmax is the preset maximum distance between the first V2V terminal and a second V2V terminal, and Pmax is the preset maximum power value for sending a signal by the first terminal. In this embodiment of the present invention, the distance between the first terminal and the second terminal and the relative speed between the first terminal and the second terminal are main factors having impact on the power value for sending a signal by the first terminal. When the relative speed between the first terminal and the second terminal and the distance between the first terminal and the second terminal are obtained by the first terminal, the first terminal may determine the theoretical power value for sending a signal by the first terminal by means of (v/Vmax)*(d/Dmax)*Pmax; when the relative speed between the first terminal and the second terminal and/or the distance between the first terminal and the second terminal are/is not obtained by the first terminal, an influencing factor v/Vmax and/or an influencing factor d/Dmax are/is 0.

In this embodiment of the present invention, the first terminal sends a signal according to a preset initial power value when the first terminal is just started up or the parameter information sent by the second terminal or the another device is not received by the first terminal. At a time period point controlled by the preset power, the first terminal obtains the first speed information, that is, the speed information of the first terminal, and determines, according to the obtained first speed information, a power value for transmitting a signal. For example, the first terminal may determine a speed scenario according to the first speed information. The speed scenario may include: a low speed scenario, an intermediate speed scenario, and a high speed scenario. A power value in a speed scenario corresponding to the first speed information is obtained by querying a stored correspondence table between a speed scenario and a power value. The power value may be greater than the preset initial power value.

When the power value for sending a signal by the first terminal is determined according to the first speed, a signal is sent to the second terminal according to the power value. The signal includes the first location information, the first speed information, and other parameter information of the first terminal, so that the second terminal performs alarm processing according to the first location information, the first speed information, and the other parameter information of the first terminal after receiving the signal.

Therefore, in this embodiment of the present invention, the first terminal may dynamically adjust, according to a speed of the first terminal, the power value for sending a signal, thereby meeting a requirement on safe driving.

It should be understood that in this embodiment of the present invention, the first terminal may alternatively adjust, by curve simulation or in another manner, the power value for sending a signal. This is not limited in this embodiment of the present invention.

Therefore, according to the communication method in this embodiment of the present invention, a first terminal receives in real time second location information and second speed information that are sent by a second terminal, and determines, in real time according to the second location information, the second speed information, and first speed information and first location information of the first terminal, a power value for sending a signal. That is, the power value for sending a signal is dynamically adjusted, and a requirement on safe driving is met.

It should be understood that in this embodiment of the present invention, the first terminal may further receive road surface parameter information sent by a road side unit device or parameter information sent by another device. This is not limited in the present invention.

Optionally, in another embodiment of the present invention, as shown in FIG. 2, the determining a power value according to the distance, the second speed information, and first speed information of the first terminal includes the following steps:

105. The first terminal receives road surface parameter information sent by a road side unit device. The road side unit device is a communications device disposed on a road side.

106. The first terminal adjusts the power value according to the road surface parameter information.

107. The first terminal sends a signal to the second terminal according to an adjusted power value.

Specifically, the road side unit device may be a device that has a communication function and that is disposed on a road side. The first terminal receives the road surface parameter information sent by the road side unit device, and determines, according to the distance between the first terminal and the second terminal, the first speed information, the second speed information, and the road surface parameter information, the power value for sending a signal by the first terminal.

It should be understood that the first terminal may further receive vehicle density information or other environmental parameter information that is sent by the road side unit device. This is not limited in the present invention.

Optionally, in this embodiment of the present invention, the adjusting the power value according to the received road surface parameter information sent by the road side unit device specifically includes: determining relative speed information between the first terminal and the second terminal according to a second speed and a first speed, and adjusting the power value according to the distance, the relative speed information, and the road surface parameter information.

Optionally, in another embodiment of the present invention, the road surface parameter information may include a braking distance, and the power value is in direct proportion to the braking distance.

Specifically, the braking distance is a running distance of the first terminal from when a user receives an alarm prompt to when the first terminal stops running. The first terminal may determine, according to the distance between the first terminal and the second terminal and the relative speed information between the first terminal and the first terminal, the power value for sending a signal by the first terminal.

In this embodiment of the present invention, the first terminal may determine an influencing factor according to the distance between the first terminal and the second terminal, a preset maximum distance between the first terminal and the second terminal, a relative speed between the first terminal and the second terminal, a preset maximum relative speed between the first terminal and the second terminal, a braking distance of the first terminal, a preset maximum braking distance of the first terminal. According to the influencing factor and a preset maximum power value for sending a signal by the first terminal, the first terminal determines a theoretical power value for sending a signal by the first terminal. The first terminal selects a larger value in the theoretical power value and a preset minimum power value for sending a signal by the first terminal as the power value for sending a signal by the first terminal, so as to meet a requirement on vehicle-to-vehicle communication during running.

For example, the power value for sending a signal by the first terminal = MAX [Pmin, (v/Vmax)*(d/Dmax)*(s/Smax)*Pmax]. Pmin is the preset minimum power value for sending a signal by the first terminal, v is the relative speed between the first terminal and the second terminal, Vmax is the preset maximum relative speed between the first terminal and the second terminal, d is the distance between the first terminal and the second terminal, Dmax is the preset maximum distance between the first V2V terminal and a second V2V terminal, s is the braking distance of the first terminal, Smax is the preset maximum braking distance of the first terminal, and Pmax is the preset maximum power value for sending a signal by the first terminal. In this embodiment of the present invention, the distance between the first terminal and the second terminal, the relative speed between the first terminal and the second terminal, and the braking distance of the first terminal are main factors having impact on the power value for sending a signal by the first terminal. By means of (v/Vmax)*(d/Dmax)*(s/Smax)*Pmax, the theoretical power value for sending a signal by the first terminal may be determined. According to the power value for sending a signal by the first terminal = MAX [Pmin, (v/Vmax)*(d/Dmax)*(s/Smax)*Pmax], the power value for sending a signal by the first terminal may be determined. For example, when Pmin = 20 MW, Vmax = 300 km/h, Pmax = 300 MW, Dmax = 150 m, Smax = 200 m, v = 100 km/h, d =100 m, and s = 100 m, the power value for sending a signal by the first V2V terminal = MAX [20 MW, (100/300)*(100/150)*(100/200)*300 MW] ≈ 33 MW. In this case, the first V2V terminal sends a signal according to the power value 33 MW.

It should be understood that technical solutions in this embodiment of the present invention are described in detail by using an example with specific numbers in which Pmin = 20 MW, Vmax = 300 km/h, Pmax = 300 MW, Dmax = 150 m, Smax = 200 m, v = 100 km/h, d =100 m, and s = 100 m, and the example poses no limitation on the scope of this embodiment of the present invention.

It should be understood that in this embodiment of the present invention, the first terminal may alternatively adjust, by curve simulation or in another manner, the power value for sending a signal. This is not limited in this embodiment of the present invention.

It should be further understood that in this embodiment of the present invention, the road surface parameter information may further include road surface information, for example, information that a road is dry cement road, a dry asphalt road, a wet asphalt road, or a wet cement road. This is not limited in this embodiment of the present invention.

In this embodiment of the present invention, the braking distance s may include a running distance s1 of the first terminal from when the user receives an alarm prompt to when the user takes a protective action, a running distance s2 of the first terminal when a brake is operated during the protective action, and a running distance s3 of the first terminal when the brake is operated continuously during the protective action. The braking distance s needs to be determined according to the first speed information, road surface material information, and a reaction time. The reaction time includes a time t1 from when the user receives the alarm prompt to when the user takes the protective action, a time t2 taken to operate the brake during the protective action, and a time t in which the brake is continuously operated. That is, the braking distance s = s1 + s2 + s3. A braking distance corresponding to first speed information and a reaction time may be obtained by querying a stored correspondence table between first speed information, a reaction time, and a braking distance. Refer to Table 1 and Table 2. Table 1 is a correspondence table between a first speed, a user reaction time, and a running distance, and a correspondence table between the first speed and a brake operation time and distance. Table 2 is a correspondence table between road surface material information, an attachment coefficient corresponding to a road surface material, the first speed, and an operation distance. For example, when the first speed of the first V2V terminal is 100 km/h, the user reaction time is 0.6s, the brake operation time is 0.5s, and the time in which the brake is continuously operated is 0.7s, s1 = 16.67 m and s2 = 13.89 m are obtained by querying Table 1, and s3 = 56.24 m is obtained by querying Table 2. Then the braking distance s = 16.67 m + 13.89 m + 56.24 m = 86.80 m.

**Table 1**

| Time (t) Distance (m) Vehicle speed (km/h) | 0.2 | 0.3 | 0.4 | 0.5 | 0.6 | 0.7 | 0.9 | 1.0 |
|---|---|---|---|---|---|---|---|---|
| 80 | 4.44 | 6.67 | 8.89 | 11.11 | 13.33 | 15.55 | 17.76 | 22.22 |
| 90 | 5.00 | 7.50 | 10.00 | 12.50 | 15.00 | 17.50 | 20.00 | 25.00 |
| 100 | 5.56 | 8.33 | 11.11 | 13.89 | 16.67 | 19.45 | 22.22 | 27.78 |

**Table 2**

| Road surface Material information | Attachment coefficient ϕ | Vehicle speed (km/h) | | |
|---|---|---|---|---|
| | | 80 | 90 | 100 |
| | | Operation distance (m) | | |
| Dry cement road | 0.7 | 36 | 45.56 | 56.24 |
| Dry asphalt road | 0.6 | 42 | 53.15 | 65.62 |
| Wet asphalt road | 0.4 | 63 | 79.72 | 98.42 |
| Dry cement road | 0.3 | 84 | 84 | 131.23 |

It should be understood that in this embodiment of the present invention, the first terminal needs to obtain the braking distance according to the road surface parameter information by querying the tables. Alternatively, the braking distance may be obtained in another manner. This is not limited in the present invention.

According to the communication method in this embodiment of the present invention, a first terminal receives in real time second location information and second speed information that are sent by a second terminal, and determines, in real time according to the second location information, the second speed information, and first speed information and first location information of the first terminal, a power value for sending a signal. That is, the power value for sending a signal is dynamically adjusted, and a requirement on safe driving is met. In addition, the first terminal adjusts, according to received road surface parameter information, the power value for sending a signal by the first terminal. Therefore, the power value for sending a signal by the first terminal is precisely determined, which can reduce signal interference when vehicles aggregate at a low speed, or avoid a problem that coverage of a signal transmitted by the first terminal cannot meet a requirement on a safe driving when vehicles run at a high speed.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

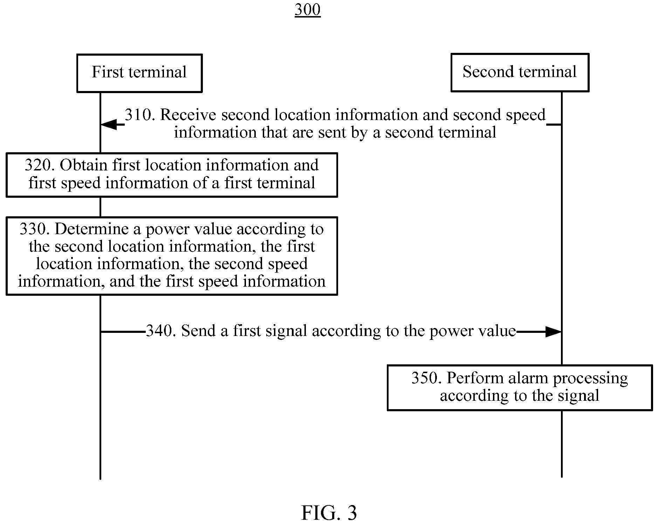

FIG. 3 is a schematic flowchart of a communication method according to another embodiment of the present invention. As shown in FIG. 3, the method 300 includes the following steps:

310. A first terminal receives second location information and second speed information that are sent by a second terminal.

320. The first terminal obtains first location information and first speed information of the first terminal.

330. The first terminal determines a power value according to the second location information, the first location information, the second speed information, and the first speed information.

340. The first terminal sends a signal to the second terminal according to the power value.

350. The second terminal performs alarm processing according to the signal.

Specifically, in 330, the determining, by the first terminal, a power value according to the second location information, the first location information, the second speed information, and the first speed information specifically includes:
determining, by the first terminal, a distance between the first terminal and the first terminal according to the second location information and the first location information; determining, by the first terminal, relative speed information between the first terminal and the second terminal according to the second speed information and the first speed information; and determining, by the first terminal, the power value according to the distance and the relative speed information between the first terminal and the second terminal.

In 340, the signal includes the first location information and the first speed information of the first terminal.

In 350, the second terminal performs alarm processing according to the first location information, the first speed information, and the second speed information and the second location information of the second terminal. When a preset alarm condition is met, the second terminal sends an alarm prompt; when the alarm condition is not met, the second terminal sends no alarm prompt.

According to the communication method in this embodiment of the present invention, a first terminal receives in real time second location information and second speed information that are sent by a second terminal, and determines, in real time according to the second location information, the second speed information, and first speed information and first location information of the first terminal, a power value for sending a signal. That is, the power value for sending a signal is dynamically adjusted, and a requirement on safe driving is met.

It should be noted that steps 310, 320, 330, and 340 included in the method 300 in this embodiment of the present invention may be specifically used to implement steps 101, 102, 103, and 104 included in the method 100 shown in FIG. 1, and are not further described herein for brevity.

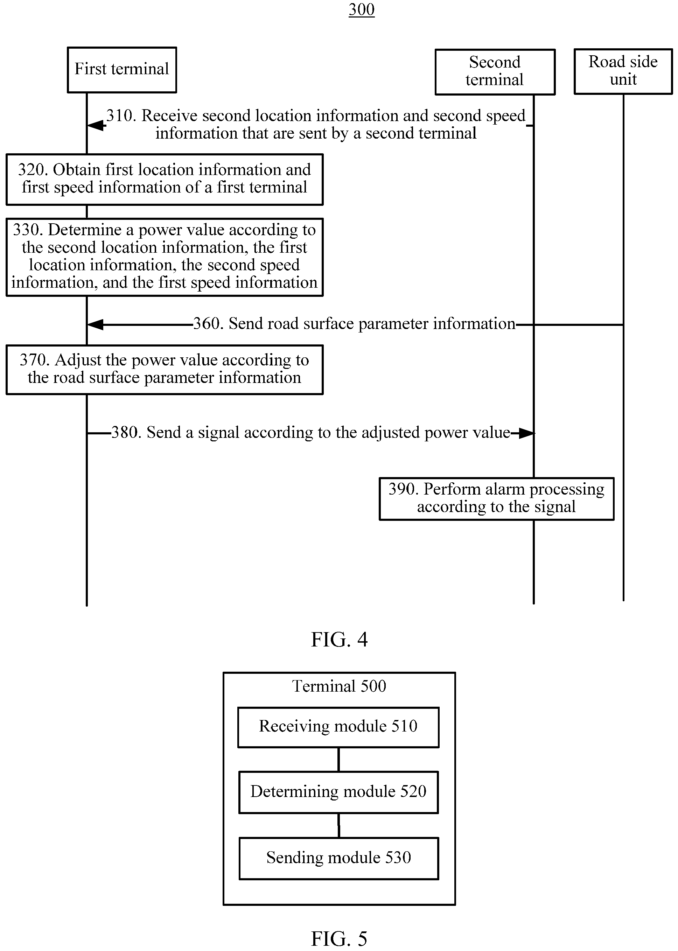

Optionally, in another embodiment of the present invention, as shown in FIG. 4, the method 300 further includes the following steps:

360. The first terminal receives road surface parameter information sent by a road side unit device.

370. The first terminal adjusts the power value according to the road surface parameter information.

380. The first terminal sends a signal to the second terminal according to an adjusted power value.

390. The second V2V terminal performs alarm processing according to the signal.

Specifically, the adjusting, by the first terminal, the power value according to the road surface parameter information specifically includes: adjusting, by the first terminal, the power value according to the first speed information, the first location information, the second speed information, the second location information, and the road surface parameter information.

According to the communication method in this embodiment of the present invention, a first terminal receives in real time second location information and second speed information that are sent by a second terminal, and determines, in real time according to the second location information, the second speed information, and first speed information and first location information of the first terminal, a power value for sending a signal. That is, the power value for sending a signal is dynamically adjusted, and a requirement on safe driving is met. In addition, the first terminal adjusts, according to received road surface parameter information, the power value for sending a signal by the first terminal. Therefore, the power value for sending a signal by the first terminal is precisely determined, which can reduce signal interference when vehicles aggregate at a low speed, or avoid a problem that coverage of a signal transmitted by the first terminal cannot meet a requirement on a safe driving when vehicles run at a high speed.

It should be noted that, steps 360, 370, 380, 340, and 350 included in the method 300 in this embodiment of the present invention may be specifically used to implement steps 105 and 106 included in the method 100 shown in FIG. 2, and are not further described herein for brevity.

In this embodiment of the present invention, the first terminal sends a signal according to a preset initial power value when the first terminal is just started up or parameter information sent by the second terminal or another device is not received by the first terminal. At a time period point controlled by the preset power, the first terminal obtains the first speed information, that is, speed information of the first terminal, and determines, according to the obtained first speed information, a power value for transmitting a signal. For example, the first terminal may determine a speed scenario according to the first speed information. The speed scenario may include: a low speed scenario, an intermediate speed scenario, and a high speed scenario. A power value in a speed scenario corresponding to the first speed information is obtained by querying a stored correspondence table between a speed scenario and a power value. The power value may be greater than the preset initial power value.

When the power value for sending a signal by the first terminal is determined according to the first speed, a signal is sent to the second terminal according to the power value. The signal includes the first location information, the first speed information, and other parameter information of the first terminal, so that the second terminal performs alarm processing according to the first location information, the first speed information, and the other parameter information of the first terminal after receiving the signal.

Therefore, in this embodiment of the present invention, the first terminal may dynamically adjust, according to a speed of the first terminal, the power value for sending a signal, thereby meeting a requirement on safe driving.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

The foregoing describes the communication method according to the embodiments of the present invention in detail with reference to FIG. 1 to FIG. 4, and the following describes a first terminal according to the embodiments of the present invention with reference to FIG. 5 to FIG. 8.

FIG. 5 is a schematic structural diagram of a terminal 500 according to an embodiment of the present invention. As shown in FIG. 5, the terminal 500 includes: a receiving module 510, a determining module 520, and a sending module 530.

The determining module 520 is configured to determine a distance between the terminal 500 and a second terminal.

The receiving module 510 is configured to receive second speed information sent by the second terminal. The second speed information is current speed information of the second terminal.

The determining module 520 is further configured to determine a power value according to the distance, the second speed information, and first speed information of the device. The first speed information is current speed information of the first terminal.

The sending module 530 is configured to send a signal to the second terminal according to the power value.

Specifically, in this embodiment of the present invention, the receiving module 510 needs to receive second speed information and second location information that are sent by the second terminal, that is, the receiving module 510 receives current speed information and current location information of the second terminal. The determining module 520 determines a distance between the terminal and the second terminal according to the current location information of the second terminal and current location information of the terminal, and determines, according to the distance between the terminal and the second terminal, the current speed information of the second terminal, and the current location information of the terminal, a power value for sending a signal by the terminal. The sending module 530 sends a signal to the second terminal according to the determined power value, so that the second terminal performs alarm processing according to the signal.

Optionally, in this embodiment of the present invention, the determining module 520 is specifically configured to:
determine relative speed information between the first terminal and the second terminal according to the second speed information and the first speed information; and determine the power value according to the distance and the relative speed information.

Therefore, according to the terminal in this embodiment of the present invention, the terminal receives in real time current location information and speed information that are sent by another terminal, and determines, in real time according to the current location information and speed information of the another terminal and current location information and speed information of the terminal, a power value for sending a signal. Therefore, the power value for sending a signal is dynamically adjusted, and a requirement on safe driving is met.

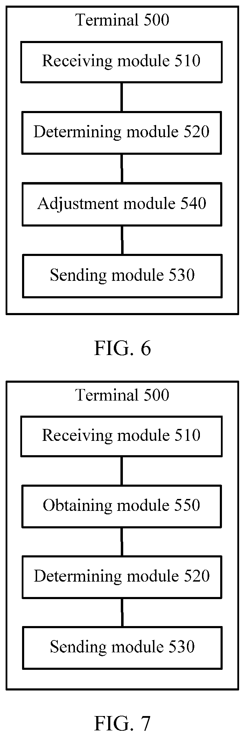

Optionally, in another embodiment of the present invention, as shown in FIG. 6, the terminal 500 further includes an adjustment module 540, where
the receiving module 510 is further configured to receive road surface parameter information sent by a road side unit device, where the road side unit device is a communications device disposed on a road side;
the adjusting module 540 is configured to adjust the power value according to the road surface parameter information; and
the sending module 530 is further configured to send a signal to the second terminal according to an adjusted power value.

According to the terminal in this embodiment of the present invention, the terminal receives in real time second location information and second speed information that are sent by a second terminal, and determines, in real time according to the second location information, the second speed information, and first speed information and first location information of the first terminal, a power value for sending a signal. That is, the power value for sending a signal is dynamically adjusted, and a requirement on safe driving is met. In addition, the terminal adjusts, according to received road surface parameter information, the power value for sending a signal by the terminal. Therefore, the power value for sending a signal by the first terminal is precisely determined, which can reduce signal interference when vehicles aggregate at a low speed, or avoid a problem that coverage of a signal transmitted by the first terminal cannot meet a requirement on a safe driving when vehicles run at a high speed.

Optionally, in another embodiment of the present invention, as shown in FIG. 7, the terminal 500 further includes an obtaining module 550, where
the obtaining module 550 is configured to obtain first location information of the first terminal;
the receiving module 510 is further configured to receive second location information sent by the second terminal; and
the determining module 520 is further configured to determine the distance between the first terminal and the second terminal according to the first location information and the second location information.

Optionally, in this embodiment of the present invention, the determining module 520 is specifically configured to determine relative speed information between the first terminal and the second terminal according to a second speed and a first speed; and
the adjustment module 540 is specifically configured to adjust the power value according to the distance, the relative speed information, and the road surface parameter information.

According to the terminal in this embodiment of the present invention, the terminal receives in real time current location information and speed information that are sent by another terminal, and determines, in real time according to relative location and speed information and a distance between the terminal and the another terminal, a power value for sending a signal. Therefore, the power value for sending a signal is dynamically adjusted, and a requirement on safe driving is met.

In this embodiment of the present invention, the terminal sends a signal according to a preset initial power value when the terminal is just started up or parameter information sent by the second terminal or the another device is not received by the terminal. At a time period point controlled by the preset power, the obtaining module 550 obtains the first speed information, that is, the speed information of the terminal. The determining module 520 determines, according to the obtained first speed information, a power value for transmitting a signal. For example, the determining module 520 may determine a speed scenario according to the first speed information. The speed scenario may include: a low speed scenario, an intermediate speed scenario, and a high speed scenario. A power value in a speed scenario corresponding to the first speed information is obtained by querying a stored correspondence table between a speed scenario and a power value. The power value may be greater than the preset initial power value.

The sending module 530 sends a signal to the second terminal according to the power value that is determined by the determining module 520 according to the first speed. The signal includes the first location information, first speed information, and other parameter information of the first terminal, so that the second terminal performs alarm processing according to the first location information, the first speed information, and the other parameter information of the terminal after receiving the signal.

Therefore, in this embodiment of the present invention, the terminal may dynamically adjust, according to a speed of the terminal, the power value for sending a signal, thereby meeting a requirement on safe driving.

It should be understood that in this embodiment of the present invention, the terminal 500 according to this embodiment of the present invention may correspond to an entity for performing the method 100 according to the foregoing embodiment of the present invention, and the above and other operations and/or functions of the modules in the terminal 500 are respectively used to implement corresponding procedures of the methods in FIG. 1 to FIG. 4, and are not further described herein for brevity.

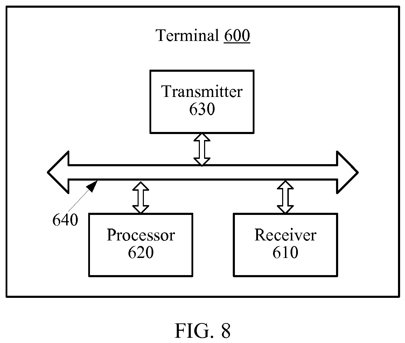

An embodiment of the present invention further provides a terminal 600. As shown in FIG. 8, the terminal 600 includes a receiver 610, a processor 620, a transmitter 630 and a bus system 640. The receiver 610, the processor 620 and the transmitter 630 are connected by using the bus system 640. The memory 720 is configured to store an instruction, and the processor 710 is configured to execute the instruction stored in the memory 720.

The processor 620 is configured to determine a distance between the terminal 600 and a second terminal.

The receiver 610 is configured to receive second speed information sent by the second terminal. The second speed information is current speed information of the second terminal.

The processor 620 is further configured to determine a power value according to the distance, the second speed information, and first speed information of the terminal. The first speed information is current speed information of the first terminal.

The transmitter 630 is configured to send a signal to the second terminal according to the power value.

According to the terminal in this embodiment of the present invention, the terminal receives in real time current location information and speed information that are sent by another terminal, and determines, in real time according to the current location information and speed information of the another terminal and current location information and speed information of the terminal, a power value for sending a signal. Therefore, the power value for sending a signal is dynamically adjusted, and a requirement on safe driving is met.

It should be understood that, in this embodiment of the present invention, the processor 620 may be a central processing unit (Central Processing Unit, CPU), or may be another general-purpose processor, digital signal processor (DSP), application-specific integrated circuit (ASIC), field-programmable gate array (FPGA), or another programmable logical device, independent gate or transistor logical device, independent hardware component, or the like. The general-purpose processor may be a microprocessor or the processor may be any conventional processor or the like.

The bus system 640 may further include a power bus, a control bus, a status signal bus, and the like in addition to a data bus. However, for clear description, various types of buses in the figure are marked as the bus system 640.

In addition, the terminal may further include the memory. The memory may include a read-only memory and a random access memory and provide an instruction and data to the processor 620. A part of the memory may further include a non-volatile random access memory. For example, the memory may further store device type information.

In an implementation process, steps of the foregoing method may be implemented by a hardware integrated logic circuit in the processor 620 or by an instruction in a software form. Steps of the methods disclosed with reference to the embodiments of the present invention may be directly embodied as being executed by a hardware processor or by a combination of hardware in the processor and software modules. The software module may be located in a mature storage medium in the field, such as a random access memory, a flash memory, a read-only memory, a programmable read-only memory, an electrically-erasable programmable memory, or a register. The storage medium is located in the memory, and the processor 620 reads information in the memory and completes the steps in the foregoing methods in combination with hardware of the processor. To avoid repetition, detailed description is not provided herein.

Optionally, in another embodiment of the present, the receiver 610 is further configured to receive road surface parameter information sent by a road side unit device, where the road side unit device is a communications device disposed on a road side;
the processor 620 is further configured to adjust the power value according to the road surface parameter information; and
the transmitter 630 is further configured to send a signal to the second terminal according to an adjusted power value.

According to the terminal in this embodiment of the present invention, the terminal receives in real time second location information and second speed information that are sent by a second terminal, and determines, in real time according to the second location information, the second speed information, and first speed information and first location information of the first terminal, a power value for sending a signal. That is, the power value for sending a signal is dynamically adjusted, and a requirement on safe driving is met. In addition, the terminal adjusts, according to received road surface parameter information, the power value for sending a signal by the terminal. Therefore, the power value for sending a signal by the first terminal is precisely determined, which can reduce signal interference when vehicles aggregate at a low speed, or avoid a problem that coverage of a signal transmitted by the first terminal cannot meet a requirement on a safe driving when vehicles run at a high speed.

Optionally, in another embodiment of the present invention, the receiver 610 is configured to obtain first location information of the first terminal;
the receiver 610 is further configured to receive second location information sent by the second terminal; and
the processor 620 is further configured to determine the distance between the first terminal and the second terminal according to the first location information and the second location information.

Optionally, in this embodiment of the present invention, the processor 620 is specifically configured to: determine relative speed information between the first terminal and the second terminal according to a second speed and a first speed; and adjust the power value according to the distance, the relative speed information, and the road surface parameter information.

According to the terminal in this embodiment of the present invention, the terminal receives in real time current location information and speed information that are sent by another terminal, and determines, in real time according to relative location and speed information and a distance between the terminal and the another terminal, a power value for sending a signal. Therefore, the power value for sending a signal is dynamically adjusted, and a requirement on safe driving is met.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. <The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, comprising:
determining, by a first terminal, a distance between the first terminal and a second terminal;
receiving, by the first terminal, second speed information sent by the second terminal, wherein the second speed information is current speed information of the second terminal;
determining, by the first terminal, a power value according to the distance, the second speed information, and first speed information of the first terminal, wherein the first speed information is current speed information of the first terminal; and
sending, by the first terminal, a signal to the second terminal according to the power value.

2. The method according to claim 1, wherein the determining, by the first terminal, a power value according to the distance, the second speed information, and first speed information of the first terminal comprises:
receiving, by the first terminal, road surface parameter information sent by a road side unit device, wherein the road side unit device is a communications device disposed on a road side;
adjusting, by the first terminal, the power value according to the road surface parameter information; and
sending, by the first terminal, a signal to the second terminal according to an adjusted power value.

3. The method according to claim 2, wherein the road surface parameter information comprises a braking distance, and the power value is in direct proportion to the braking distance.

4. The method according to claim 1, wherein the determining, by a first terminal, a distance between the first terminal and a second terminal specifically comprises:
obtaining, by the first terminal, first location information of the first terminal;
receiving, by the first terminal, second location information sent by the second terminal; and
determining, by the first terminal, the distance between the first terminal and the second terminal according to the first location information and the second location information.

5. The method according to claim 1, wherein the determining, by the first terminal, a power value according to the distance, the second speed information, and first speed information of the first terminal specifically comprises:
determining, by the first terminal, relative speed information between the first terminal and the second terminal according to the second speed information and the first speed information; and
determining, by the first terminal, the power value according to the distance and the relative speed information.

6. The method according to claim 2, wherein the adjusting, by the first terminal, the power value according to the received road surface parameter information sent by the road side unit device specifically comprises:
determining, by the first terminal, relative speed information between the first terminal and the second terminal according to the second speed and the first speed; and
adjusting, by the first terminal, the power value according to the distance, the relative speed information, and the road surface parameter information.

7. The method according to claim 1 or any one of claims 3 to 6, wherein the distance is in direct proportion to the power value.

8. The method according to claim 5 or 6, wherein the relative speed is in direct proportion to the power value.

9. A terminal, comprising:
a determining module, configured to determine a distance between the terminal and a second terminal;
a receiving module, configured to receive second speed information sent by the second terminal, wherein the second speed information is current speed information of the second terminal; and
the determining module is further configured to determine a power value according to the distance, the second speed information, and first speed information of the first terminal, wherein the first speed information is current speed information of the first terminal; and
a sending module, configured to send a signal to the second terminal according to the power value.

10. The terminal according to claim 9, further comprising an adjustment module, wherein
the receiving module is further configured to receive road surface parameter information sent by a road side unit device, wherein the road side unit device is a communications device disposed on a road side;
the adjusting module is configured to adjust the power value according to the road surface parameter information; and
the sending module is further configured to send a signal to the second terminal according to an adjusted power value.

11. The terminal according to claim 9, further comprising an obtaining module, wherein
the obtaining module is configured to obtain first location information of the first terminal;
the receiving module is further configured to receive second location information sent by the second terminal; and
the determining module is further configured to determine the distance between the first terminal and the second terminal according to the first location information and the second location information.

12. The terminal according to claim 9, wherein the determining module is specifically configured to:
determine relative speed information between the first terminal and the second terminal according to the second speed information and the first speed information; and
determine the power value according to the distance and the relative speed information.

13. The terminal according to claim 10, wherein
the determining module is specifically configured to determine relative speed information between the first terminal and the second terminal according to the second speed and the first speed; and
the adjustment module is specifically configured to adjust the power value according to the distance, the relative speed information, and the road surface parameter information.
